(19) **Europäisches Patentamt / European Patent Office / Office européen des brevets**

(11) **EP 2 262 165 B1**

(12) **EUROPEAN PATENT SPECIFICATION**

(45) Date of publication and mention
of the grant of the patent:
**05.12.2012 Bulletin 2012/49**

(21) Application number: **09745412.8**

(22) Date of filing: **12.05.2009**

(51) Int Cl.:
***H04L 9/32*** (2006.01)          ***G06F 21/00*** (2006.01)
***H04L 29/06*** (2006.01)

(86) International application number:
**PCT/CN2009/071752**

(87) International publication number:
**WO 2009/138028 (19.11.2009 Gazette 2009/47)**

(54) **USER GENERATED CONTENT REGISTERING METHOD, APPARATUS AND SYSTEM**

VERFAHREN ZUM REGISTRIEREN EINES VON EINEM BENUTZER ERZEUGTEN INHALTS UND ZUGEHÖRIGES GERÄT UND SYSTEM

PROCÉDÉ, APPAREIL, ET SYSTÈME D'ENREGISTREMENT DE CONTENUS PRODUITS PAR L'UTILISATEUR

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **12.05.2008 CN 200810106367**

(43) Date of publication of application:
**15.12.2010 Bulletin 2010/50**

(73) Proprietor: **Huawei Technologies Co., Ltd.
Longgang District, Shenzhen
Guangdong 518129 (CN)**

(72) Inventors:
• **LIU, Yijun
 Shenzhen 518129 (CN)**
• **GAO, Hongtao
 Shenzhen 518129 (CN)**

(74) Representative: **Kreuz, Georg Maria et al
Huawei Technologies Duesseldorf GmbH
Dessauerstrasse 3
80992 München (DE)**

(56) References cited:
**EP-A2- 1 398 710          CN-A- 1 411 224
CN-A- 1 588 849          CN-A- 101 047 504
US-A1- 2006 195 914**

**Description**

**FIELD OF THE TECHNOLOGY**

The present invention relates to the field of network technology, and more particularly to a method, a device, and a system for registering user generated content (UGC).

**BACKGROUND OF THE INVENTION**

A UGC usually refers to a content generated by an ordinary user, for example, text, picture, video, audio, and various forms of works created by users and uploaded to groups and blogs. Usually, the user freely uploads the personally created content to a certain fixed website, that is, the UGC is usually uploaded to a certain fixed website, so as to bring certain benefits to the website. Due to the free uploading, it cannot be ensured that the uploader is the real author of the content, so that the benefit of the real author of the UGC is affected, and the creation enthusiasm of the author is hurt. Meanwhile, due to the free uploading, the content may be freely forwarded to other websites, so that the influence of the website to which the user uploads the content is limited. Therefore, the content needs to be registered for the subsequent management. However, for the author of the UGC, the procedure of the existing registration manner is too complicated, even more complicated than the procedure of creating the UGC, so that if the existing content registration manner is applied to the procedure of registering the UGC, a high registration cost and a complicated registration manner are resulted in.

EP1398710 A2 relates to a process flow example of a content registration procedure starting with the registrant's application for registering content, primarily carried out by the content registration server, master 50A. The necessary information and original content 311are sent to the content registration server, master 50A. The content registration/ deregistering unit 51 receives necessary information including the registrant information 455 and the content 311 from the content registrant terminal 80 and sends the content 311 to the content verification server 60. The content verification server 60 verifies the content and returns the result of verification. The content registration server checks the content verification result returned. If there is no problem, the unit that manages registration information assigns a content ID that is not in use to the content. Then the unit that generates signatures 52 generates a signature 312. Then a new content entry 459 is added to the registration database 45B. Finally, the content registering/deregistering unit 51 sends a notification of result "registration procedure complete" together with the signed content 31 to the content registrant terminal.

**SUMMARY OF THE INVENTION**

The present invention is directed to a method, a device, and a system for registering UGC, thereby solving the problem that an existing content registering manner is complicated with a high cost.

According to its first aspect the present invention provides a method for registering UGC, which includes the following steps:

A content registration request is received by a content identity manager, CIM, in which the content registration request carries a UGC and a guarantee credential corresponding to the UGC, and the guarantee credential is generated by a third party network entity according to the UGC and an ID identification, wherein the ID identification is an identifier of a user registered on the third party network entity.

The UGC is registered according to the guarantee credential, wherein the registering of the UGC according to the guarantee credential comprises: verifying a validity of the guarantee credential; verifying an applicability of the UGC, if the guarantee credential is valid; and generating a content ID corresponding to the UGC, if the UGC is applicable.

According to its second aspect the present invention provides a device for registering UGC, which includes a receiving module and a registration module.

The receiving module is configured to receive a content registration request, in which the content registration request carries a UGC and a guarantee credential corresponding to the UGC, and the guarantee credential is generated by a third party network entity according to the UGC and an ID identification, wherein the ID identification is an identifier of a user registered on the third party network entity.

The registration module is configured to register the UGC according to the guarantee credential. The registration module is further configured to verify the validity of the guarantee credential, verify the applicability of the UGC if the guarantee credential is valid, and generate a content identity (ID) corresponding to the UGC if the UGC is applicable

According to its third aspect the present invention provides a system for registering UGC, which includes a website and a content identity manager (CIM).

The website is configured to receive a UGC sent by a user, and generate a corresponding guarantee credential for the UGC according to the UGC and an ID identification.

The CIM is configured to receive a content registration request, in which the content registration request carries the UGC and the guarantee credential, and is configured to register the UGC according to the guarantee credential.

According to the present invention, the website to which the UGC is uploaded provides the guarantee, and the CIM registers the UGC according to the guarantee provided by the website, so that the UGC is registered with a simple and feasible registration process.

## BRIEF DESCRIPTION OF THE DRAWINGS

FIG. 1 is a schematic flow chart of an embodiment of a method for registering UGC according to the present invention;

FIG. 2 is a schematic flow chart of a first example of the embodiment of the method for registering UGC according to the present invention;

FIG. 3 is a schematic flow chart of ID registration in the embodiment of the method for registering UGC according to the present invention;

FIG. 4 is a schematic flow chart of a second example of the embodiment of the method for registering UGC according to the present invention;

FIG. 5 is a schematic structural view of a first embodiment of a device for registering UGC according to the present invention;

FIG. 6 is a schematic structural view of a second embodiment of the device for registering UGC according to the present invention;

FIG. 7 is a schematic structural view of a first embodiment of a system for registering UGC according to the present invention; and

FIG. 8 is a schematic structural view of a second embodiment of the system for registering UGC according to the present invention.

## DETAILED DESCRIPTION OF THE EMBODIMENTS

Technical solutions of the present invention are further described in detail with reference to the accompanying drawings and embodiments.

A content registration refers to a procedure of applying from authoritative agencies for a relevant characteristic description of a content serving as an independent individual. In subsequent operation and management procedures relevant to the content, other attribute descriptions of the individual may be associated according to the characteristic description. For the content registration, usually a content provider is required to provide relevant evidence documents having force adeffect, when providing the content to a management entity, for example, a CIM, to register, so as to authenticate that the provided content is owned by the person applying for the registration. For example, if a software developer intends to register the newly finished software, the software developer needs to provide the certificates from the authoritative agencies, a certificate of legal person from an enterprise, and a novelty assessment report from state authoritative departments. In the following embodiment, a trusted third party (TTP) provides a guarantee credential, and a detailed process is described in the following.

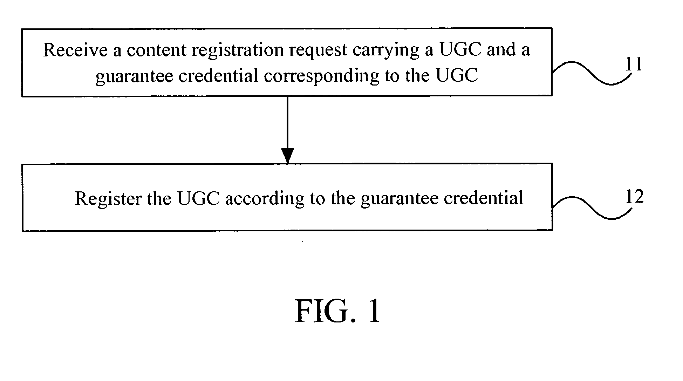

FIG. 1 is a schematic flow chart of an embodiment of a method for registering UGC according to the present invention. The embodiment includes the following steps.

In step 11, a CIM receives a content registration request, in which the content registration request carries a UGC and a guarantee credential corresponding to the UGC, and the guarantee credential is generated by a third party network entity, for example, a website to receive the UGC.

In step 12, the CIM registers the UGC according to the guarantee credential.

In this embodiment, the website to which the UGC is to be uploaded provides the guarantee credential, so that the CIM finishes registering the UGC according to the guarantee credential, so the registration is simple and feasible.

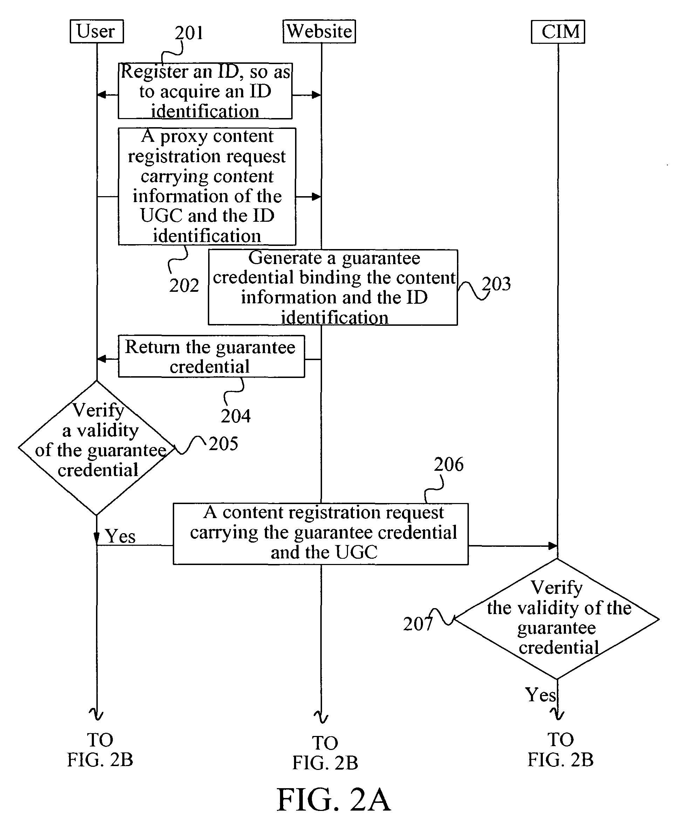

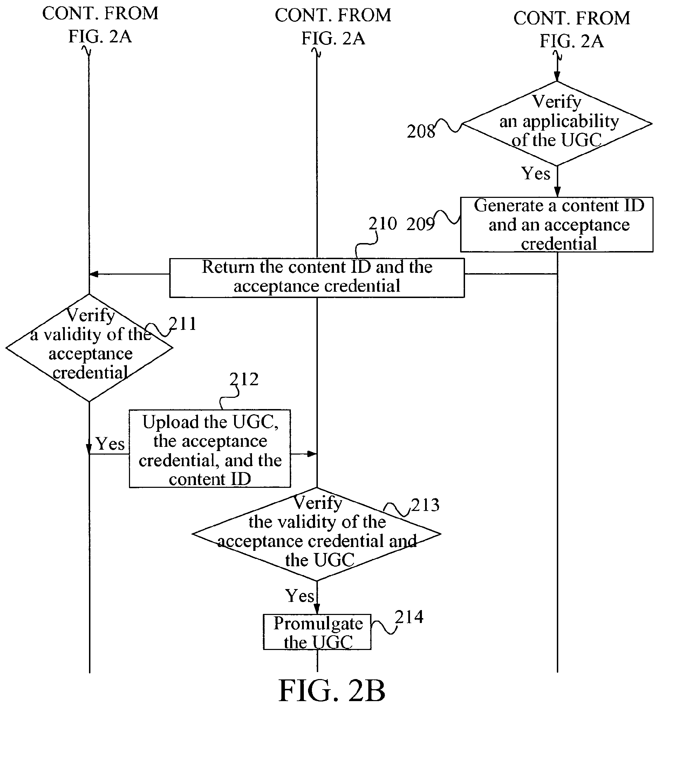

FIG. 2 is a schematic flow chart of a first example of the embodiment of the method for registering UGC according to the present invention. As compared with the embodiment as shown in FIG. 1, this embodiment includes steps 201-203 before step 11.

In step 201, a user performs an identity (ID) registration on a website, for example, a website proxy agent (WPA), so as to acquire an identification identifier User_ID, the website is configured to receive and publish the uploaded UGC, and the UGC needs to be registered to the CIM before being published on the website, thereby ensuring benefits of a real author of the UGC.

In step 202, the user sends a proxy content registration request to the website waiting to receive the UGC. The proxy content registration request carries the UGC, the ID identification, and a registration mode indicating, for example, whether a user self-application mode or a website direct proxy mode is adopted. A specific parameter description of the content registration request may be Content_Hash+User_ID+Regist_Mode, including a content hash value Content_Hash of the UGC to be applied for registration, the ID identification User_ID, and the registration mode Regist_Mode. For sake of the security of the UGC, in this embodiment, the user uploads the content hash value Content_Hash as the UGC to the website, alternatively, if the website is sufficiently trusted, the user may also upload the UGC content itself Content.

In step 203, the website generates the guarantee credential according to the UGC and the ID identification, in which the guarantee credential is configured to bind the UGC and the ID identification. A specific parameter description of the guarantee credential may be

$Sign_{WPA}(Hash(Content\_Hash + User\_ID + TimeStamp))$, hereafter referred to as $Sign_{WPA}(P^*)$ for short, for ease of illustration. Specifically, the WPA makes the received content hash value Content_Hash, the assigned ID identification User_ID, and a relatively correct time during the operation (or a timestamp acquired from a time authoritative management entity) TimeStamp to be connected in series, performs a hash operation, and performs a signature calculation by using a private key corresponding to a relevant public certificate of the WPA, so as to acquire the guarantee credential, for ensuring that the UGC is owned by the user having the User_ID.

When the website generates the corresponding guarantee credential for the UGC, the UGC is registered to the CIM. As compared with the embodiment as shown in FIG. 1, in step 11 of this embodiment, the CIM receives the content registration request sent by the user, which specifically includes steps 204-207.

In step 204, if the registration mode carried in the proxy content registration request indicates that the user self-application mode is adopted, the website returns the guarantee credential $Sign_{WPA}(P^*)$ to the user.

In step 205, the user verifies the validity of the guarantee credential, so as to determine whether the website generates the guarantee credential for the UGC to be registered, and the user verifies the guarantee credential, so as to determine that the WPA primarily guarantees a right of attribution of the UGC. That is to say, the user executes a $Veri(^{Sign}_{WPA}(P^*))$ operation. If the guarantee credential is valid, step 206 is performed.

In step 206, the user sends the content registration request to the CIM. The content registration request carries the UGC to be registered and the guarantee credential corresponding to the UGC and generated by the website. The specific code of the content registration request may be $Enc_{RAND}(Content + User\_ID + Sign_{WPA}(P^*) + WPA\_URL) + Enc_{CIM\_PubKey}(RAND)$

For the parameters, Content is the content itself of the UGC to be registered, User_ID is the ID identification acquired by the user after registering on the website, $Sign_{WFA}(P^*)$ is the guarantee credential acquired after the website performs an acknowledgement signing on the UGC provided by the user, and WPA_URL is a resource ID of the website to receive the UGC. A security channel is not established between the user and the CIM in advance, so that when the above parameters are transmitted, the parameters must be encrypted. Specifically, the parameters are transmitted after being encrypted by using a session key RAND, and the session key RAND is transmitted to the CIM after being encrypted by a public key certificate of the CIM, and transmission parameters include an attribute description list of the content.

That is to say, encryption processes, that is:

$$Enc_{RAND}(Content + User\_ID + Sign_{WPA}(P^*) + WPA\_URL) \text{ and } Enc_{CIM\_Pubkey}(RAND), \text{ are respectively performed.}$$

As compared with the embodiment as shown in FIG. 1, step 12 in this embodiment specifically includes steps 207-209.

In step 207, the CIM verifies the validity of the guarantee credential, that is, determines whether the guarantee credential comes from a trusted website. If the guarantee credential comes from a trusted website, step 208 is performed.

In step 208, the CIM verifies the applicability of the UGC, that is, verifies whether the UGC may apply for registration in the CIM management domain. If the UGC may apply for registration in the CIM management domain, step 209 is performed.

In the above verification process, the applicability of the UGC may be firstly verified, and then the guarantee credential is verified. If one of the above items does not pass the verification, error information will be generated.

A specific parameter description of the verification process may be

$$\text{Extract}(\text{Content} + \text{User\_ID} + \text{Sign}_{WPA}(P^*)) +\text{Veri}_{CIM\_PrvKey}(\text{Sign}_{WPA}(P^*))$$

That is to say, the CIM firstly performs a decryption by using the corresponding private key, to acquire the session key RAND, and then performs the decryption by using the session key, to acquire the corresponding parameter set including Content, User_ID, and $\text{Sign}_{WPA}(P^*)$, that is, the decryption operation

Extract(Content+User_ID+$\text{Sign}_{WPA}(P^*)$) is performed to acquire the above parameter set.

Then, it is verified whether Content provided by the user can be registered in the CIM management domain. If the Content provided by the user can be registered in the CIM management domain, the validity of the guarantee credential $\text{Sign}_{WPA}(P^*)$ provided by the WPA is verified, that is, a verification operation $\text{Veri}_{CIM\_PrvKey}(\text{Sign}_{WPA}(P^*))$ is executed. If the verification succeeds, a next operation of generating a content ID is triggered; if the verification does not succeed, error information is generated.

In step 209, the content ID Cntnt_ID corresponding to the UGC, the corresponding attribute description list Attribute_List and the acceptance credential are generated. The detailed operation parameter description may be

$$\text{Generate}(\text{Cntnt\_ID} + \text{Attribute\_List}) + \text{Sign}_{CIM\_PrvKey}(P^* + \text{Cntnt\_ID})$$

The detailed algorithm is described as follows. Firstly, the Cntnt_ID and the Attribute_List are generated, the corresponding content ID Cntnt_ID and the attribute description list are stored in a special database, and the attribute description list may be configured to determine that whether the content subsequently to be applied for registration can be applied in the CIM domain. That is to say, the Generate(Cntnt_ID+Attribute_List) operation is performed.

Then, a signature calculation is performed by using the private key of the CIM corresponding to the content ID promulgation certificate, so as to generate the acceptance credential configured to bind the parameter set and the Cntnt_ID, in which the acceptance credential is configured to enable the website waiting to receive the UGC to know that the content to be applied for registration is successfully registered, so as to lawfully publish the successfully registered UGC.

That is to say, the $\text{Sign}_{CIM\_PrvKey}(P^* + \text{Cntnt\_ID})$ operation is performed.

In order to publish the registered UGC on the website, this embodiment may further include steps 210-214.

In step 210, the CIM sends the content ID and the acceptance credential to the user through the security channel, and the detailed operation code is $\text{Enc}_{RAND}(\text{Sign}_{CIM\_PrvKey}(P^* + \text{Cntnt\_ID}) + \text{Cntnt\_ID})$. Alternatively, the CIM sends the generated error information to the user.

In step 211, after receiving the information returned by the CIM and determining that the information is not the error information, the user verifies the validity of the acceptance credential generated by the CIM. If the acceptance credential is valid, that is, the acceptance credential comes from the valid CIM, step 212 is performed. The detailed operation parameter description is

$$\text{Veri}(\text{Sign}_{CIM\_PrvKey}(P^* + \text{Cntnt\_ID})) + \text{Get}(\text{Cntnt\_ID})$$

The detailed algorithm is described as follows. After receiving the data sent by the CIM, if the data sent by the CIM is not the error information, the user decrypts the data packet by using the RAND, and verifies the acceptance credential $\text{Sign}_{CIM\_PrvKey}(P^* + \text{Cntnt\_ID})$, that is, $\text{Veri}(\text{Sign}_{CIM\_PrvKey}(P^* + \text{Cntnt\_ID}))$. If the acceptance credential passes the verification, the content ID Get(Cntnt_ID) is acquired, indicating that the UGC is successfully registered on the CIM..

In step 212, the user uploads the content itself Content of the UGC applied for registration and the corresponding acceptance credential to the website, or sends the decryption key of the originally uploaded encrypted UGC (for example, the content hash value Content _Hash) to the website. The detailed operation parameter description may be that the user sends Content+Cntnt_ID+$\text{Sign}_{CIM\_Prvkey}(P^* + \text{Cntnt\_ID})$ to the website.

In step 213, the website verifies the validity of the acceptance credential. If the acceptance credential is valid, it is compared whether the content itself Content of the uploaded UGC and the content hash value Content _Hash are consistent, and if they are consistent, step 214 is performed; if they are consistent, other operations are performed according to the preset policy. The detailed operation parameter description can be

$$\mathrm{Veri}(\mathrm{Sign}_{CIM\_PrvKey}(P^{*} + \mathrm{Cntcn\_ID})) + \mathrm{Comp}(\mathrm{Content}, \mathrm{Content\_Hash}).$$

In step 214, the UGC is published according to the preset policy.

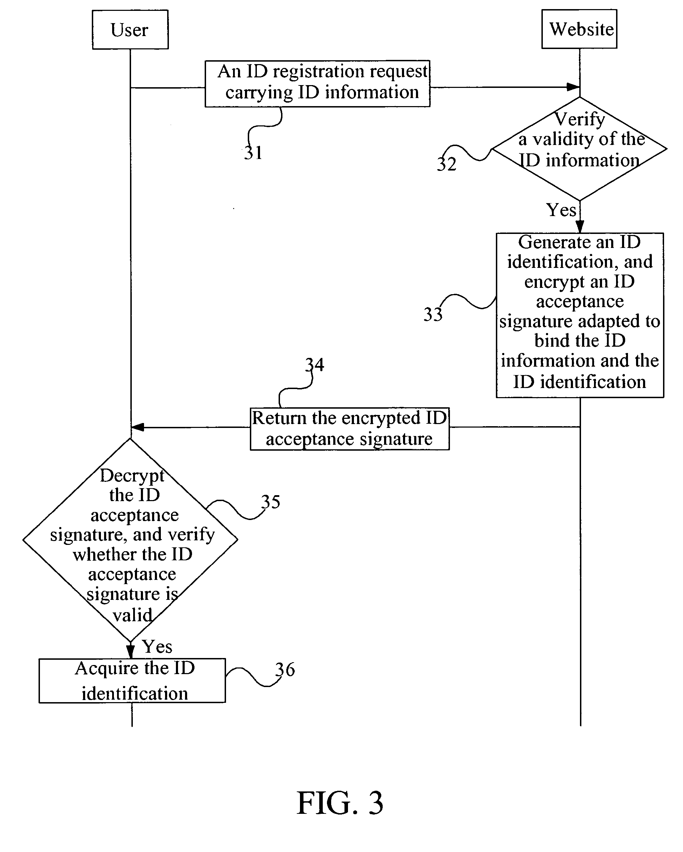

FIG. 3 is a schematic flow chart of ID registration in the embodiment of the method for registering UGC according to the present invention, that is, step 201 specifically includes the following steps. In step 31, the user sends an ID registration request to the website, for example, the WPA, and the ID registration request carries the ID information of the user. When performing the ID registration, the user may adopt a real-name registration or a pseudo-real-name registration. As for the real-name registration, the website requires that the ID information submitted by the user when performing the ID registration is the real information of the user, for example, a real name, an ID card number, and a contact method such as a telephone number and a home address, and some other necessary personal information required by the website. As for the pseudo-real-name registration, the user adopts the certificate of the authoritative third party, for example, the certificate of the bank usually used by the user, and submits the signature of the private key required by the using of the certificate when submitting the ID registration request.

The detailed parameter description of the ID registration request may be

$\mathrm{Enc}_{RAND}(\mathrm{RealName\_Params}) + \mathrm{Enc}_{WAP\_PubKey}(\mathrm{RAND} + \mathrm{Hash}(\mathrm{RAND} + \mathrm{RealName\_Params}))$ When the real-name registration is adopted, the user needs to provide the real personal ID information, the XML expression of a part of fields is shown as the following.

```
<Real_Name>
<Name>
real-name
</Name>
<Credential_Material>
```

The third party credential that can be authenticated, includes a digital certificate or an extension application of the digital certificate, and may further include a mobile phone number and other ID management information

```
</Credential_Marerial>
<Veri_Mode>
```

The verification mode is adopted by verifying the credential material. For example, the ID card number needs to be interacted with the data of the ministry of public security, and if the credential material is the digital certificate, the interaction with the delivery center of the digital certificate is needed.

```
</Veri_Mode>
</Real_Name>
```

In step 32, the WPA verifies the validity of the ID information sent by the user. If the ID information sent by the user is valid, step 33 is performed; if the ID information sent by the user is not valid, the WPA returns error information to the user. The WPA may verify whether the ID information provided by the user is true from the TTP.

In step 33, the WPA generates an ID identification corresponding to the ID information which is used to upload the UGC, and generates an ID acceptance signature which is used to bind the ID information and the ID identification. Specifically, if it is verified that the ID information provided by the user is trusted, the WPA generates the User_ID in the website for the user, connects the user ID and the ID registration information submitted by the user in series, and signs by using the private key corresponding to the public key certificate published to outside by the WPA

$\mathrm{Sign}_{WPA}(\mathrm{Hash}(\mathrm{Authorized\_Material}) + \mathrm{User\_ID})$, hereafter referred to as $\mathrm{Sign}_{WPA}(P^{**})$ for short, that is, the WPA accepts the real-name or pseudo-real-name registration of the user on the website. For sake of the security, the ID acceptance signature may be encrypted.

In step 34, the ID acceptance signature is encrypted and returned to the user. The detailed operation code may be that the WPA returns $\mathrm{Enc}_{RAND}(\mathrm{Sign}_{WPA}(P^{**}))$ to the user.

In step 35, the user verifies if the ID acceptance signature is valid, to make sure that if the ID registration is successful. If the ID registration is successful, step 36 is performed. The detailed operation code is $\mathrm{Extract}_{RAND}(\mathrm{Sign}_{WPA}(P^{**}))$.

In step 36, the ID identification is acquired. The detailed operation code is Get(User_ID).

In this embodiment, the UGC is registered by adopting the user self-application mode. The website provides the guarantee credential for the UGC. When the user performs content registration to the CIM, the user sends the UGC to be registered and the guarantee credential provided by the website to the CIM, and the CIM registers the UGC according to the guarantee credential by using a simple and feasible registration method.

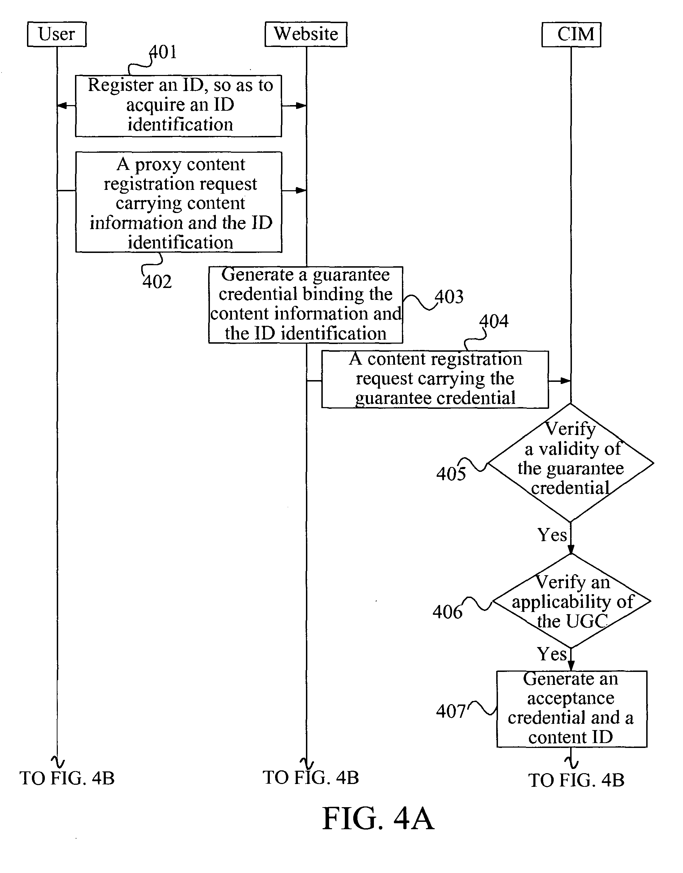

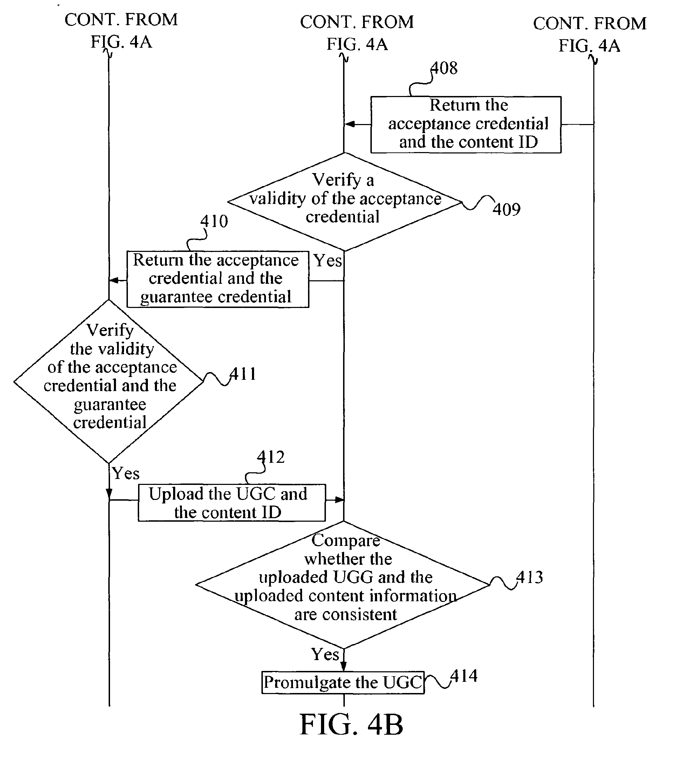

FIG. 4 is a schematic flow chart of a second example of the embodiment of the method for registering UGC according to the present invention. The embodiment includes the following steps.

In step 401, the user performs ID registration on the website to which the UGC is uploaded, for example, the WPA, so as to acquire the ID identification. The process that the user performs the ID registration on the website is the same as the process as shown in the first example.

In step 402, the user sends the proxy content registration request to the website. The proxy content registration request carries the UGC, the ID identification, and the registration mode indicating, for example, whether the user self-application mode or the website direct proxy mode is adopted. The detailed code of the content registration request may be Content_Hash+User_ID+Regist_Mode, including the content hash value Content_Hash of the UGC to be applied for registration, the ID identification User_ID, and the registration mode Regist_Mode. Meanwhile, in the sent parameter set, the content value encrypted by adopting the random number RAND generated by the user as the key, that is, $Enc_{RAND}$(Content), may be selectively sent.

In step 403, the website generates the guarantee credential according to the UGC and the ID identification, in which the guarantee credential is configured to bind the UGC and the ID identification. A particular code of the guarantee credential may be

$Sign_{WPA}$(Hash(Content_Hash + User_ID + TimeStamp)), hereafter referred to as $Sign_{WPA}$(P*) for short, for ease of illustration. Specifically, the WPA makes the received content hash value Content_Hash, the assigned ID identification User_ID, and a relatively correct time during the operation (or a timestamp acquired from a time authoritative management entity) TimeStamp to be connected in series, performs a hash calculation, and performs a signature calculation by using a private key corresponding to a relevant public certificate of the WPA, so as to acquire the guarantee credential, for ensuring that the UGC is owned by the user having the User_ID.

In step 404, if the registration mode indicates that the website direct proxy mode is adopted, the website directly sends the content registration request to the CIM. The content registration request carries the content hash value of the UGC to be registered and the guarantee credential corresponding to the UGC and generated by the website. That is to say, a parameter description of the content registration request may be

$$Content\_Hash + User\_ID + Sign_{WPA}(P^*) + TimeStamp$$
$$+ Sign_{WPA}(Hash(RAND_{WPA})) + Enc_{CIM\_PubKey}(RAND_{WPA})$$

In step 405, the validity of the guarantee credential is verified. If the guarantee credential is valid, step 406 is performed.

In step 406, an applicability of the UGC is verified, that is, it is verified if the UGC can be applied for registration in the CIM management domain. If the applicability passes the verification, step 407 is performed.

For the specific algorithm of the above verification process, firstly the guarantee signature $Sign_{WPA}$(P*) provided by the WPA for the UGC extracted after the decryption of the encrypted data packet is verified. After the verification succeeds, it is inspected about the applicability of the UGC to be applied for registration, that is, it is ensured that no repeated application exists in the CIM management domain, and meanwhile, the attribute description relevant to the UGC is checked.

In step 407, the content ID Cntnt_ID corresponding to the UGC and an acceptance credential are generated, in which the acceptance credential is configured to bind the content ID and the guarantee credential, and is configured to enable the website waiting to receive the UGC to know that the content applied for registration is successfully registered, so as to lawfully publish the successfully registered UGC. If one of the above items does not pass the verification, error information is generated. Specifically, after the verification is finished, Cntnt_ID and an attribute description list corresponding to the UGC are triggered to be generated, and the acceptance credential which binds Content_Hash of the UGC, User_ID, WPA_URL, and TimeStamp newly acquired by the CIM is also triggered to be generated, and the relevant data is stored. The detailed parameter description of the acceptance credential may be

$$Sign_{CIM\_PrvKey}(Content\_hash + Cntnt\_ID + User\_ID + WPA\_URL + TimeStamp)$$ ,

hereafter referred to as $Sign_{CIM\_PrvKey}(*)$ for short.

In step 408, the CIM sends the content ID and the acceptance credential to the website through a security channel, or returns the error information to the website. That is to say, the CIM returns $Sign_{CIM\_PrvKey}(*)$+Cntnt_ID to the website.

In step 409, after receiving the information returned by the CIM and determining that the information is not the error information, the website verifies the validity of the acceptance credential generated by the CIM. If the acceptance credential is valid, step 410 is performed; if the acceptance credential is not valid, the process of applying the content registration through the proxy is ended. The detailed operation parameter description is $Veri(Sign_{CIM\_PrvKey}(*))$.

In step 410, the website sends the content ID, the acceptance credential generated by the CIM, and the guarantee credential generated by the website itself to the user, or sends the generated error information to the user.

That is to say, the website returns $Sign_{CIM\_PrvKey}(*)$+$Sign_{WPA}(P*)$ to the user.

In step 411, after receiving the information returned by the CIM and determining that the information is not the error information, the user verifies the acceptance credential generated by the CIM and the guarantee credential generated by the website. If the verification succeeds, step 412 is performed.

The detailed operation parameter description may be $Veri(Sign_{CIM\_PrvKey}(*))$ + $Veri(Sign_{WPA}(P*))$.

In step 412, the user uploads the UGC applied for registration and the corresponding content ID to the website, or sends the decryption key for the originally uploaded encrypted UGC to the website.

That is, the user uploads Content+Cntnt_ID to the website.

In step 413, the website compares whether the uploaded contents are consistent, and if the uploaded contents are consistent, step 414 is performed. The detailed operation code may be Comp (Content, Content_Hash).

In step 414, the UGC is published according to the preset policy; if the uploaded contents are not consistent, other operations are performed according to the preset policy.

In this embodiment, the UGC is registered by adopting the user self-application mode. The website provides the guarantee credential for the UGC, and sends the guarantee credential and the UGC to be registered uploaded by the user to the CIM after the website generates the guarantee credential, and the CIM registers the UGC according to the guarantee credential using a simple and feasible registration method.

Persons of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present invention are performed. The storage medium may be any medium that is capable of storing program codes, such as a ROM, a RAM, a magnetic disk, and an optical disk.

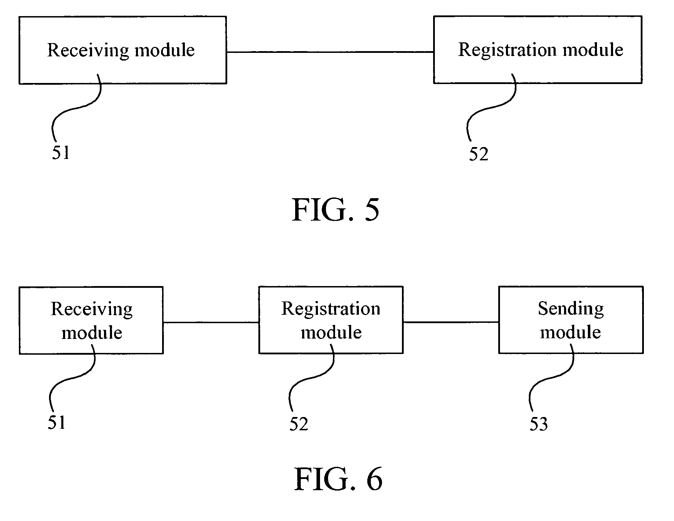

FIG. 5 is a schematic structural view of a first embodiment of a device for registering UGC according to the present invention. The embodiment includes a receiving module 51 and a registration module 52. The receiving module 51 is configured to receive a content registration request, in which the content registration request carries a UGC and a guarantee credential corresponding to the UGC, and the guarantee credential is generated by a third party network entity, for example, a website waiting to receive the UGC. The registration module 52 is configured to register the UGC according to the guarantee credential.

The receiving module 51 is configured to receive the content registration request sent by the user or the content registration request sent by the website.

The registration module 52 is specifically configured to verify the validity of the guarantee credential. If the guarantee credential is valid, the registration module verifies the applicability of the UGC, and generates a content ID corresponding to the UGC if the UGC is applicable. In order to enable the website to lawfully make the UGC to be public, when generating the content ID, the registration module generates an acceptance credential, in which the acceptance credential is configured to enable the website waiting to receive the UGC to know that the content applied for registration is successfully registered, so as to lawfully make the successfully registered UGC to be public.

In this embodiment, the website provides the guarantee credential for the UGC, so that the UGC is registered using a simple and feasible registration method.

FIG. 6 is a schematic structural view of a second embodiment of the device for registering UGC according to the present invention. As compared with the first embodiment, this embodiment further includes a sending module 53. The sending module 53 is configured to directly send the content ID and the acceptance credential generated by the registration module 52 to the user, or is configured to send the content ID and the acceptance credential to the website.

In this embodiment, the website provides the guarantee credential for the UGC, so that the UGC is registered using a simple and feasible registration method. Further, a direct interaction with the user or an interaction with the website may be selected according to the registration mode, so that the registration manner is diversified.

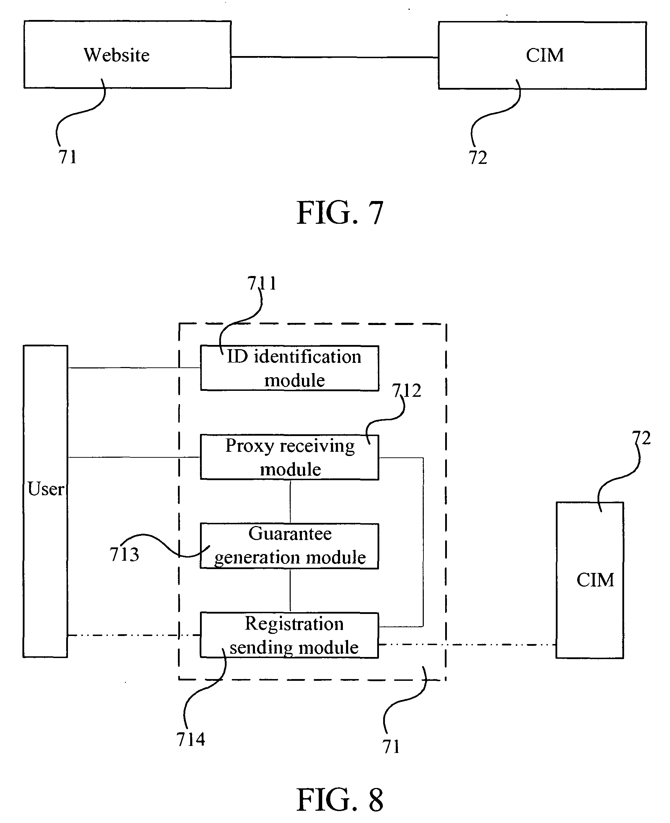

FIG. 7 is a schematic structural view of a first embodiment of a system for registering UGC according to the present invention. The embodiment includes a website 71 and a CIM 72. The website 71 is configured to receive a UGC sent by a user, and generate a corresponding guarantee credential for the UGC. The CIM 72 is configured to receive a content registration request, in which the content registration request carries the UGC and an ID identification, and the CIM is configured to register the UGC according to the ID identification.

In this embodiment, the website provides the guarantee credential for the UGC submitted by the user, so that the method for registering UGC prevents the problems of a complicated process and high cost in the prior art.

FIG. 8 is a schematic structural view of a second embodiment of the system for registering UGC according to the present invention. As compared with the first embodiment, the website 71 of this embodiment specifically includes an ID identification module 711, a proxy receiving module 712, and a guarantee generation module 713. The ID identification module 711 is configured to provide an ID identification for a user. The proxy receiving module 712 is configured to receive a proxy content registration request sent by the user, in which the proxy content registration request carries the UGC and the ID identification. The guarantee generation module 713 is configured to generate the guarantee credential for binding the UGC and the ID identification received by the proxy receiving module 712.

The proxy content registration request received by the proxy receiving module 712 further carries a registration mode. The website further includes a registration sending module 714. The registration sending module 714 is configured to send the guarantee credential generated by the guarantee generation module 713 to the user, when the registration mode received by the proxy receiving module 712 indicates that the registration adopts a user self-application mode, so that the user sends the content registration request to the CIM after verifying that the guarantee credential is valid. Alternatively, the registration sending module 714 is configured to directly send the content registration request to the CIM after the guarantee generation module generates the guarantee credential, when the registration mode indicates that the registration adopts a website direct proxy mode.

In this embodiment, the website provides the guarantee credential for the UGC submitted by the user, so that the method for registering UGC prevents the problems of a complicated process and high cost in the prior art. Further, in this embodiment, the user directly performs the registration or the website realizes the registration of the UGC as a proxy according to the registration mode selected by the user, so that method for registering UGC is simple and feasible, and is diversified.

Finally, it should be noted that the above embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions.

## Claims

1. A method for registering user generated content, UGC, comprising:

   receiving (11), by a content identity manager, CIM, a content registration request,
   wherein the content registration request carries a UGC and a guarantee credential corresponding to the UGC, and the guarantee credential is generated by a third party network entity according to the UGC and an ID identification, wherein the ID identification is an identifier of a user registered on the third party network entity; and
   registering (12), by the CIM, the UGC according to the guarantee credential;
   wherein the registering of the UGC according to the guarantee credential comprises:

   verifying a validity of the guarantee credential;
   verifying an applicability of the UGC, if the guarantee credential is valid; and
   generating a content ID corresponding to the UGC, if the UGC is applicable.

2. The method according to claim 1, wherein the receiving of the content registration request comprises: receiving the content registration request sent by a user; and generating, by the third party network entity, the guarantee credential and sending the guarantee credential to the user, and carrying, by the user, the guarantee credential in the content registration request after the user verifies that the guarantee credential is valid.

3. The method according to claim 1, further comprising: if the UGC is applicable, generating an acceptance credential corresponding to the UGC, wherein the acceptance credential is configured to enable a website waiting to receive the UGC to know that the content is successfully registered.

4. The method according to claim 3, further comprising:

   receiving the acceptance credential and the corresponding UGC uploaded by the user or uploading the acceptance credential and a corresponding decryption key after the acceptance credential is sent to the user, wherein the decryption key is configured to decrypt the pre-uploaded encrypted UGC; and
verifying (213) the validity of the acceptance credential, and publishing (214) the uploaded UGC or publishing the pre-uploaded UGC decrypted according to the decryption key.

5. The method according to claim 3, further comprising: after generating an acceptance credential,
sending, by the CIM, the content ID and the acceptance credential to the user, wherein the acceptance credential passes a verification by the user; or
sending, by the CIM, the content ID and the acceptance credential to the website; verifying, by the website, the validity of the acceptance credential, and sending the content ID, the acceptance credential, and the guarantee credential to the user, if the acceptance credential is valid, wherein the acceptance credential and the guarantee credential pass the verification by the user.

6. A device for registering user generated content, UGC, comprising:

a receiving module (51), configured to receive a content registration request, wherein the content registration request carries a UGC and a guarantee credential corresponding to the UGC, and the guarantee credential is generated by a third party network entity according to the UGC and an identity, ID, identification, wherein the ID identification is an identifier of a user registered on the third party network entity; and
a registration module (52), configured to register the UGC according to the guarantee credential,

wherein the registration module (52) is further configured to
verify the validity of the guarantee credential,
verify the applicability of the UGC if the guarantee credential is valid, and
generate a content identity, ID, corresponding to the UGC if the UGC is applicable.

7. The device according to claim 6, wherein the registration module (52) is further configured to generate an acceptance credential corresponding to the UGC if the UGC is applicable, and the acceptance credential is configured to enable a website waiting to receive the UGC to know that the content is successfully registered.

8. The device according to claim 6, further comprising a sending module (53), configured to send the content ID and the acceptance credential to a user after the registration module (52) generating an acceptance credential, or send the content ID and the acceptance credential to the website after the registration module (52) generating an acceptance credential.

9. A system for registering user generated content, UGC, comprising a device for registering user generated content as any one of claims 6-8 and a website:

a website, configured to receive a UGC sent by a user, and generate a guarantee credential according to the UGC and an ID identification corresponding to the UGC.

**Patentansprüche**

1. Verfahren zum Registrieren von anwendererzeugtem Inhalt, UGC, das Folgendes umfasst:

Empfangen (11) durch einen Inhaltsidentitätsmanager, CIM, einer Inhaltsregistrierungsanforderung, wobei die Inhaltsregistrierungsanforderung einen UGC und einen dem UGC entsprechenden Garantienachweis führt und der Garantienachweis durch eine Netzentität eines Dritten entsprechend dem UGC und
einer ID-Identifizierung erzeugt wird, wobei die ID-Identifizierung eine Kennung eines Anwenders ist, der in der Netzentität eines Dritten registriert ist; und
Registrieren (12) durch den CIM des UGC in Übereinstimmung mit dem Garantienachweis;
wobei das Registrieren des UGC in Übereinstimmung mit dem Garantienachweis Folgendes umfasst:

Verifizieren einer Gültigkeit des Garantienachweises;
Verifizieren einer Anwendbarkeit des UGC, falls der Garantienachweis gültig ist; und
Erzeugen einer Inhalts-ID, die dem UGC entspricht, falls der UGC anwendbar ist.

2. Verfahren nach Anspruch 1, wobei das Empfangen der Inhaltsregistrierungsanforderung Folgendes umfasst: Empfangen der Inhaltsregistrierungsanforderung, die von einem Anwender gesendet wird; und Erzeugen durch die Netzentität eines Dritten des Garantienachweises und Senden des Garantienachweises zu dem Anwender und Führen durch den Anwender des Garantienachweises in der Inhaltsregistrierungsanforderung, nachdem der Anwender verifiziert hat, dass der Garantienachweis gültig ist.

3. Verfahren nach Anspruch 1, das ferner Folgendes umfasst: falls der UGC anwendbar ist, Erzeugen eines Akzeptanznachweises, der dem UGC entspricht, wobei der Akzeptanznachweis konfiguriert ist, eine Website, die auf den Empfang des UGC wartet, in die Lage zu versetzen, zu wissen, dass der Inhalt erfolgreich registriert worden ist.

4. Verfahren nach Anspruch 3, das ferner Folgendes umfasst:

Empfangen des Akzeptanznachweises und des entsprechenden UGC, der durch den Anwender hochgeladen wird, oder Hochladen des Akzeptanznachweises und eines entsprechenden Entschlüsselungsschlüssels, nachdem der Akzeptanznachweis zu dem Anwender gesendet worden ist, wobei der Entschlüsselungsschlüssel konfiguriert ist, den vorher hochgeladenen verschlüsselten UGC zu entschlüsseln; und
Verifizieren (213) der Gültigkeit des Akzeptanznachweises und Veröffentlichen (214) des hochgeladenen UGC oder Veröffentlichen des vorher hochgeladenen UGC, der gemäß dem Entschlüsselungsschlüssel entschlüsselt worden ist.

5. Verfahren nach Anspruch 3, das ferner Folgendes umfasst: nach dem Erzeugen eines Akzeptanznachweises Senden durch den CIM der Inhalts-ID und des Akzeptanznachweises zu dem Anwender, wobei der Akzeptanznachweis eine Verifikation durch den Anwender durchläuft; oder
Senden durch den CIM der Inhalts-ID und des Akzeptanznachweises zu der Website; Verifizieren durch die Website der Gültigkeit des Akzeptanznachweises und Senden der Inhalts-ID, des Akzeptanznachweises und des Garantienachweises zu dem Anwender, falls der Akzeptanznachweis gültig ist, wobei der Akzeptanznachweis und der Garantienachweis die Verifikation durch den Anwender durchlaufen.

6. Vorrichtung zum Registrieren von anwendererzeugtem Inhalt, UGC, die Folgendes umfasst:

ein Empfangsmodul (51), das konfiguriert ist, eine Inhaltsregistrierungsanforderung zu empfangen, wobei die Inhaltsregistrierungsanforderung einen UGC und einen Garantienachweis, der dem UGC entspricht, führt und der Garantienachweis durch eine Netzentität eines Dritten in Übereinstimmung mit dem UGC und einer Kennungs-Identifizierung, ID-Identifizierung, erzeugt wird, wobei die ID-Identifizierung eine Kennung eines Anwenders ist, der in der Netzentität eines Dritten registriert ist; und
ein Registrierungsmodul (52), das konfiguriert ist, den UGC in Übereinstimmung mit dem Garantienachweis zu registrieren,
wobei das Registrierungsmodul (52) ferner konfiguriert ist,
die Gültigkeit des Garantienachweises zu verifizieren,
die Anwendbarkeit des UGC zu verifizieren, falls der Garantienachweis gültig ist, und
eine Inhaltskennung, Inhalts-ID, die dem UGC entspricht, zu erzeugen, falls der UGC anwendbar ist.

7. Vorrichtung nach Anspruch 6, wobei das Registrierungsmodul (52) ferner konfiguriert ist, einen Akzeptanznachweis, der dem UGC entspricht, zu erzeugen, falls der UGC anwendbar ist, und der Akzeptanznachweis konfiguriert ist, eine Website, die auf den Empfang des UGC wartet, in die Lage zu versetzen, zu wissen, dass der Inhalt erfolgreich registriert worden ist.

8. Vorrichtung nach Anspruch 6, die ferner ein Sendemodul (53) umfasst, das konfiguriert ist, die Inhalts-ID und den Akzeptanznachweis zu einem Anwender zu senden, nachdem das Registrierungsmodul (52) einen Akzeptanznachweis erzeugt hat, oder die Inhalts-ID und den Akzeptanznachweis zu der Website zu senden, nachdem das Registrierungsmodul (52) einen Akzeptanznachweis erzeugt hat.

9. System zum Registrieren von anwendererzeugtem Inhalt, UGC, das eine Vorrichtung zum Registrieren von anwendererzeugtem Inhalt nach einem der Ansprüche 6-8 und eine Website umfasst:

wobei eine Website konfiguriert ist, einen durch einen Anwender gesendeten UGC zu empfangen und einen Garantienachweis in Übereinstimmung mit dem UGC und eine ID-Identifizierung, die dem UGC entspricht, zu erzeugen.

**Revendications**

1. Procédé pour l'enregistrement de contenu généré par les utilisateurs (UGC, User Generated Content), comprenant :

   la réception (11), par un gestionnaire d'identité de contenu, CIM (Content Identity Manager), d'une demande d'enregistrement de contenu, dans lequel la demande d'enregistrement de contenu transporte un contenu UGC et un justificatif de garantie correspondant au contenu UGC, et le justificatif de garantie est généré par une entité de réseau tierce conformément au contenu UGC et à une identification ID, dans lequel l'identification ID est un identifiant d'un utilisateur enregistré sur l'entité de réseau tierce ; et
   l'enregistrement (12), par le gestionnaire CIM, du contenu UGC conformément au justificatif de garantie ;
   dans lequel l'enregistrement du contenu UGC conformément au justificatif de garantie comprend :

   la vérification d'une validité du justificatif de garantie ;
   la vérification d'une applicabilité du contenu UGC si le justificatif de garantie est valide ; et
   la génération d'un ID de contenu correspondant au contenu UGC si le contenu UGC est applicable.

2. Procédé selon la revendication 1, dans lequel la réception de la demande d'enregistrement de contenu comprend :
   la réception de la demande d'enregistrement de contenu envoyée par un utilisateur ; et la génération, par l'entité de réseau tierce, du justificatif de garantie et l'envoi du justificatif de garantie à l'utilisateur, et l'acheminement, par l'utilisateur, du justificatif de garantie dans la demande d'enregistrement de contenu après que l'utilisateur a vérifié que le justificatif de garantie était valide.

3. Procédé selon la revendication 1, comprenant en outre : si le contenu UGC est applicable, la génération d'un justificatif d'acceptation correspondant au contenu UGC, dans lequel le justificatif d'acceptation est configuré pour permettre à un site Web attendant de recevoir le contenu UGC de savoir que le contenu a bien été enregistré.

4. Procédé selon la revendication 3, comprenant en outre :

   la réception du justificatif d'acceptation et du contenu UGC correspondant téléchargé par l'utilisateur ou le téléchargement du justificatif d'acceptation et d'une clé de décryptage correspondante après que le justificatif d'acceptation a été envoyé à l'utilisateur, dans lequel la clé de décryptage est configurée pour décrypter le contenu UGC crypté préalablement téléchargé ; et
   la vérification (213) de la validité du justificatif d'acceptation, et la publication (214) du contenu UGC téléchargé ou la publication du contenu UGC préalablement téléchargé décrypté conformément à la clé de décryptage.

5. Procédé selon la revendication 3, comprenant en outre : après la génération d'un justificatif d'acceptation, l'envoi, par le gestionnaire CIM, de l'ID de contenu et du justificatif d'acceptation à l'utilisateur, dans lequel le justificatif d'acceptation est soumis à une vérification par l'utilisateur ; ou
   l'envoi, par le gestionnaire CIM, de l'ID de contenu et du justificatif d'acceptation au site Web ;
   la vérification, par le site Web, de la validité du justificatif d'acceptation et l'envoi de l'ID de contenu, du justificatif d'acceptation et du justificatif de garantie à l'utilisateur si le justificatif d'acceptation est valide, dans lequel le justificatif d'acceptation et le justificatif de garantie sont soumis à la vérification par l'utilisateur.

6. Dispositif pour l'enregistrement de contenu généré par les utilisateurs, UGC, comprenant :

   un module de réception (51), configuré pour recevoir une demande d'enregistrement de contenu, dans lequel la demande d'enregistrement de contenu transporte un contenu UGC et un justificatif de garantie correspondant au contenu UGC, et le justificatif de garantie est généré par une entité de réseau tierce conformément au contenu UGC et à une identification d'identité, ID, dans lequel l'identification d'ID est un identifiant d'un utilisateur enregistré sur l'entité de réseau tierce ; et
   un module d'enregistrement (52), configuré pour enregistrer le contenu UGC conformément au justificatif de garantie,
   dans lequel le module d'enregistrement (52) est en outre configuré pour vérifier la validité du justificatif de garantie,
   vérifier l'applicabilité du contenu UGC si le justificatif de garantie est valide, et
   générer une identité de contenu, ID, correspondant au contenu UGC si le contenu UGC est applicable.

7. Dispositif selon la revendication 6, dans lequel le module d'enregistrement (52) est en outre configuré pour générer un justificatif d'acceptation correspondant au contenu UGC si le contenu UGC est applicable, et le justificatif d'acceptation est configuré pour permettre à un site Web attendant de recevoir le contenu UGC de savoir que le contenu a bien été enregistré.

8. Dispositif selon la revendication 6, comprenant en outre un module d'envoi (53), configuré pour envoyer l'ID de contenu et le justificatif d'acceptation à un utilisateur après que le module d'enregistrement (52) a généré un justificatif d'acceptation, ou pour envoyer l'ID de contenu et le justificatif d'acceptation au site Web après que le module d'enregistrement (52) a généré un justificatif d'acceptation.

9. Système pour l'enregistrement de contenu généré par les utilisateurs (UGC), comprenant un dispositif pour l'enregistrement de contenu généré par les utilisateurs selon l'une quelconque des revendications 6 à 8 et un site web :

un site Web, configuré pour recevoir un contenu UGC envoyé par un utilisateur, et
pour générer un justificatif de garantie conformément au contenu UGC et une identification d'ID correspondant au contenu UGC.

Receive a content registration request carrying a UGC and a guarantee credential corresponding to the UGC $\quad$ 11

Register the UGC according to the guarantee credential $\quad$ 12

# FIG. 1

| User | 201 | Website | | CIM |

Register an ID, so as to acquire an ID identification

A proxy content registration request carrying content information of the UGC and the ID identification

202

Generate a guarantee credential binding the content information and the ID identification 203

Return the guarantee credential

204

Verify a validity of the guarantee credential 205

206

A content registration request carrying the guarantee credential and the UGC

Yes

Verify the validity of the guarantee credential

207

Yes

TO
FIG. 2B

TO
FIG. 2B

TO
FIG. 2B

# FIG. 2A

CONT. FROM
FIG. 2A

CONT. FROM
FIG. 2A

CONT. FROM
FIG. 2A

208 — Verify
an applicability
of the UGC

Yes

Generate a content ID
and an acceptance
credential

210 209

Return the content ID and the
acceptance credential

Verify
a validity of the
acceptance
credential

211

212

Upload the UGC,
the acceptance
credential, and the
content ID

Yes

Verify
the validity of the
acceptance credential and
the UGC

213

Yes

Promulgate
the UGC

214

FIG. 2B

User | Website

An ID registration request carrying ID information

31

Verify a validity of the ID information

32

Yes

Generate an ID identification, and encrypt an ID acceptance signature adapted to bind the ID information and the ID identification

33

34

Return the encrypted ID acceptance signature

Decrypt the ID acceptance signature, and verify whether the ID acceptance signature is valid

35

Yes

Acquire the ID identification

36

# FIG. 3

FIG. 4A

CONT. FROM
FIG. 4A

CONT. FROM
FIG. 4A

CONT. FROM
FIG. 4A

408

Return the
acceptance credential
and the content ID

Verify a
validity of the acceptance
credential
409

410

Return the acceptance
credential and the
guarantee credential
Yes

Verify
the validity
of the acceptance
credential and the
guarantee
credential
411

412

Yes

Upload the UGC and
the content ID

Compare
whether the
uploaded UGG and the
uploaded content information
are consistent
413

Yes

Promulgate the UGC
414

FIG. 4B

| Receiving module | Registration module |
|:---:|:---:|

51

52

# FIG. 5

| Receiving module | Registration module | Sending module |
|:---:|:---:|:---:|

51

52

53

# FIG. 6

FIG. 7

FIG. 8

**EP 2 262 165 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1398710 A2